# EUROPÄISCHE PATENTANMELDUNG

(11) **EP 0 859 162 A1**
(43) Veröffentlichungstag der Anmeldung: **19.08.1998**
(21) Anmeldenummer: 98102508.3
(22) Anmeldetag: 13.02.1998
(51) Int. Cl.: F16D 65/00

(54) **Bremssattelmodul für Scheibenbremsen**

(30) Priorität: 15.02.1997 DE 19705801
(71) Anmelder: ITT MANUFACTURING ENTERPRISES, INC., Wilmington, Delaware 19801 (US)
(72) Erfinder: Egerer, Thomas, 61184 Karben (DE)
(74) Vertreter: Portwich, Peter

(57) **Zusammenfassung**

Vorgeschlagen wird ein Bremssattelmodul für Scheibenbremsen mit einem Bremssattel (1), der in montiertem Zustand die Bremsscheibe mit einem Brückenabschnitt randseitig übergreift und der einen Arbeitszylinder (2) mit Anschlüssen (3, 4) für eine hydraulische Betätigungseinrichtung sowie Montageaugen (5, 6) für eine Bolzenführung umfaßt. Zum Bremssattelmodul gehören ferner ein Arbeitskolben und zwei Belagträgerplatten (7, 8), die mittels Federelementen (9) gegen die Stirnfläche des Kolbens bzw. die Innenfläche des außen liegenden Schenkels (10) des Bremssattels (1) angedrückt sind und die in montiertem Zustand mit je zwei in Umfangsrichtung der Bremsscheibe gesehen, beabstandeten belagfreien Tragteilen (11, 12) in Ausnehmungen eines Bremsträgers eingreifen.

Zur Sicherung der Positionierung der Belagträgerplatten (7, 8) im Bremssattelmodul während der Lagerung, des Transports und der Montagevorbereitung ist ein abnehmbarer Abstandshalter (13', 13'') vorgesehen, der die Belagträgerplatten (7, 8) bis zur Befestigung des Bremssattelmoduls am Bremsträger in der bei der Herstellung eingestellten Position hält. Damit ist sichergestellt, daß die kostengünstige Modulbauweise ohne Nachteile für die Funktionssicherheit der Bremsen realisiert werden kann.

## Beschreibung

Die Erfindung betrifft ein Bremssattelmodul für eine Scheibenbremse mit einem Bremssattel, der in montiertem Zustand mit einem Brückenabschnitt die Bremsscheibe randseitig übergreift und der einen Arbeitszylinder mit Anschlüssen für eine hydraulische Betätigungseinrichtung sowie Montageaugen für eine Bolzenführung umfaßt, mit einem Arbeitskolben sowie mit zwei Bremsbacken, die mittels Federelementen gegen die Stirnfläche des Kolbens bzw. die Innenfläche des außen liegenden Schenkels des Bremssattels angedrückt sind und die in montiertem Zustand mit je zwei in Umfangsrichtung der Bremsscheibe gesehen beabstandeten, reibbelagfreien Endteilen in Ausnehmungen eines Bremsträgers eingreifen.

Im Zuge der fortschreitenden Rationalisierung der Herstellungs- und Montageverfahren werden heute in zunehmendem Maße Bremssattelmodule hergestellt, gelagert und transportiert, bei denen der die Bremsscheibe in montiertem Zustand randseitig übergreifende Bremsträger fehlt, weil er als integraler Bestandteil des Achsschenkels ausgebildet ist, an dem das Rad mit Bremsscheibe drehbar gelagert ist. Das hat den Vorteil, daß man pro Rad zwei Schraubverbindungen einsparen kann, was sich günstig auf das Gewicht und den Montagekosten auswirkt.

Ein derartiges Bremssattelmodul wird bei der Montage vorzugsweise mittels einer sogenannten Bolzenführung mit dem Bremsträger verbunden, wobei es für eine einwandfreie Funktion der Scheibenbremsen darauf ankommt, daß die bei der Vormontage des Bremssattelmoduls genau positionierten, aus Belagträger und Reibbelag bestehenden Bremsbacken nicht unbeabsichtigt aus ihrer bestimmungsgemäßen Lage verschoben werden. Da die Bremskräfte direkt auf den relativ zum Rad feststehenden Bremsträger übertragen werden müssen, sind die Belagträgerplatten mittels der Federelemente nur axial gegen die Stirnfläche des Kolbens und die Innenfläche des außen liegenden Schenkels des Bremssattels angedrückt, d. h. kraftschlüssig gehalten, senkrecht dazu, aber nicht formschlüssig fixiert. Eine Festlegung in Umfangsrichtung erfolgt erst beim Einsetzen der reibbelagfreien Endteile der Belagträgerplatten in entsprechende Ausnehmungen des Bremsträgers, die ihrerseits eine funktionell notwendige axiale Verschiebung der Belagträgerplatten relativ zum Bremsträger und zur Bremsscheibe zulassen.

Wird das aus den beiden Bremsbacken bestehende Paket beim Transport oder bei der Montage aus seiner korrekten, bei der Herstellung eingestellten Position verschoben, ist im allgemeinen eine einwandfreie Endmontage am Fertigungsband des Kraftfahrzeugherstellers nicht mehr möglich, mit der Folge, daß mit einem Verlust an Bremswirkung gerechnet werden muß und daß das Bremsverhalten eines Fahrzeugs dadurch erheblich gestört werden kann. Unterschiedliche Bremsleistungen an den Rädern eines Fahrzeugs sind nicht zuletzt auch sicherheitstechnisch gefährlich.

Es besteht somit die Aufgabe, dafür zu sorgen, daß bei Bremssattelmodulen der eingangs genannten Art die Bremsbacken ihre bei der Bremssattelmontage eingestellte Position bis zur Endmontage beibehalten und daß schädliche Verschiebungen während der Lagerung, des Transports und der Montagevorbereitung sicher verhindert werden. Dabei darf selbstverständlich die Montage nicht behindert oder erschwert werden, damit die mit der genannten Modulbauweise erreichten wirtschaftlichen Vorteile nicht verloren gehen.

Zur Lösung dieser Aufgabe wird vorgeschlagen, daß das Bremssattelmodul für Lagerung und Transport mit einem abnehmbaren Abstandshalter versehen ist, der die Bremsbacken - im speziellen die Belagträgerplatten - bis zur Befestigung des Bremssattelmoduls am Bremsträger in der bei der Herstellung eingestellten Position hält.

Aus der DE 41 16 502 A1 ist zwar schon ein Abstandshalter bekannt, der zwischen die Bremsbacken eingeschoben wird und quasi die Bremsscheibe ersetzt. Damit ist jedoch nur eine axiale Beabstandung der Bremsbacken zueinander möglich, was bei Bremssattelmodulen der eingangs genannten Art wegen des fehlenden Bremsträgers jedoch nicht ausreicht.

Der Abstandshalter ist vorzugsweise jeweils mit auf die Dicke der Belagträgerplatten abgestimmten und entsprechend beabstandeten Ausnehmungen ausgestattet und von oben auf die belagfreien Endteile der Belagträgerplatten klemmend aufsteckbar ausgeführt. Damit läßt sich in einfacher Weise sicherstellen, daß die Belagträgerplatten bei ihrer Handhabung die eingestellte korrekte Position beibehalten, daß sie sich insbesondere nicht relativ zueinander verschieben können.

Gemäß einer Weiterbildung des Erfindungsgedankens, weist der Abstandshalter außerdem eine auf die zugehörige Bremsscheibe abgestimmte und beabstandete Ausnehmung auf, um die Zuordnung des Bremssattelmoduls zu erleichtern und Fehlmontagen zu vermeiden. Außerdem kann der Abstandshalter für die gleichen Zwecke farbig markiert oder aus eingefärbtem Material hergestellt sein. Zweckmäßigerweise besteht er aus einem geeigneten Kunststoff und ist zweiteilig ausgebildet, wobei jeder der Abstandshalter zwei auf die Belagträgerdicke abgestimmte Ausnehmungen aufweist.

Besonders einfach und materialsparend kann er aus Kunststoff-Strangpreßprofilen gefertigt werden. Abschnitte derartiger Profile können leicht mit sich senkrecht zur Strangachse erstreckenden Ausnehmungen versehen werden. Insbesondere können im Hinblick auf die Materialersparnisse Abschnitte eines Kunststoffrohres verwendet werden, in denen im Querschnitt gesehen, im wesentlichen rechteckige, sich über etwa dem halben Rohrquerschnitt erstreckende und auf die Dicke der Belagträgerplatten sowie der Bremsscheibe abgestimmte und beabstandete Ausnehmungen ausgebildet sind. Derartige Rohrabschnitte sind äußerst einfach zu handhaben, farbig leicht zu markieren und benötigen im Rahmen eines Rücklaufsystems nur wenig Transportvolumen.

Damit ist für die gattungsmäßigen Bremssattelmodule eine Abstandshalterung geschaffen, die bei minimalem Aufwand sicherstellt, daß die Belagträgerplatten richtig positioniert bleiben und die geschilderte Modulbauweise ohne Nachteile für die Bremsfunktionen realisiert werden kann, was insbesondere dann bedeutsam ist, wenn die Endmontage außerhalb des unmittelbaren Einflußbereiches des Scheibenbremsenherstellers erfolgt.

Weitere Einzelheiten werden anhand des in den Figuren 1 bis 3 dargestellten Ausführungsbeispielen näher erläutert.
- Fig. 1: zeigt eine Seitenansicht eines Bremssattelmoduls gemäß der Erfindung mit einem zweiteiligen Abstandshalter in Form von Rohrabschnitten,
- Fig. 2: zeigt eine etwas verkleinerte Draufsicht des Bremssattelmoduls gemäß Fig. 1,
- Fig. 3: zeigt einen rohrförmigen Abstandshalter im Schnitt.

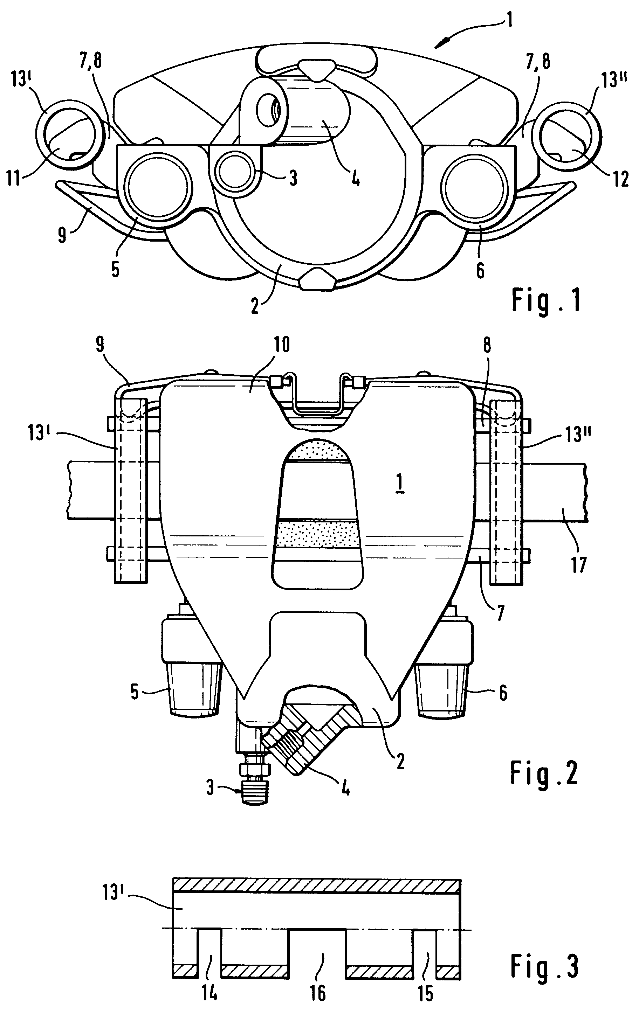

Das Bremssattelmodul gemäß Fig. 1 umfaßt einen gießtechnisch hergestellten Bremssattel 1, an dem einstückig ein Arbeitszylinder 2 mit Anschlüssen 3, 4 für eine hydraulische Betätigungseinrichtung sowie Montageaugen 5, 6 für eine Bolzenführung ausgebildet sind. Im Arbeitszylinder 2 ist ein nicht bezeichneter Arbeitskolben angeordnet, der bei einer hydraulischen Betätigung durch Axialverschiebung des Bremssattels 1 relativ zum Bremsträger die aus Belagträger und Reibbelag bestehenden Bremsbacken beidseitig an die Bremsscheibe andrückt. Die Reibbeläge sind auf Belagträgerplatten 7, 8 befestigt und erstrecken sich nicht über die gesamte Fläche der Belagträgerplatten 7, 8. Diese haben vielmehr belagfreie Tragteile 11, 12, die in montiertem Zustand in axial verlaufende Ausnehmungen eines nicht dargestellten Bremsträgers eingreifen. Die Belagträgerplatten 7, 8 werden mittels Federelementen 9 gegen die Stirnfläche des Kolbens bzw. die Innenfläche des außen liegenden Schenkels 10 des Bremssattels 1 angedrückt.

Auf die Tragteile 11, 12 der Belagträgerplatten 7, 8 sind Abstandshalter 13', 13'' in Form von Rohrabschnitten aufgesteckt. Diese Abstandshalter weisen auf die Dicke der Belagträgerplatten 7, 8 abgestimmte Ausnehmungen auf, die entsprechend der gewünschten Positionierung der Belagträgerplatten 7, 8 voneinander beabstandet sind.

Aus Fig. 2 ist ersichtlich, wie der Bremssattel 1 mit seinem Brückenabschnitt die Bremsscheibe 17 von oben randseitig übergreift und wie die beiden Belagträgerplatten 7, 8 mittels der rohrförmigen Abstandshalter 13', 13'' relativ zur Bremsscheibe beabstandet gehalten werden. Die axial außen liegende Belagträgerplatte 8 ist mittels eines Federelementes 9 gegen die Innenfläche des außen liegenden Schenkels 10 des Bremssattels 1 angedrückt, während die axial innen liegende Belagträgerplatte 7 mittels eines nicht dargestellten Federelementes gegen die Stirnfläche des ebenfalls nicht dargestellten Arbeitskolbens angedrückt wird. Aus Fig. 2 ergibt sich auch die Lage des Arbeitszylinders 2, der hydraulischen Anschlüsse 3 und 4 sowie der Montageaugen 5, 6 für die Bolzenführung.

Fig. 3 zeigt einen rohrförmigen Abstandshalter 13' im Schnitt, wobei die Ausnehmungen 14, 15 und 16 bis zur Mittellinie hochgezogen sind, d. h. sich über den halben Rohrquerschnitt erstrecken. Es ist ohne weiteres einleuchtend, daß dieser in der Schnittdarstellung kammartige Abstandshalter 13' ohne weiteres auf die Tragteile 11, 12 der Belagträgerplatten 7, 8 aufgesteckt und nach der Montage wieder abgezogen werden kann. Die Ausnehmung 16 dient der richtigen Zuordnung des Bremssattelmoduls zur Bremsscheibe 17. Der Abstandshalter 13' kann außerdem noch farbig markiert sein, wenn die Ausgestaltung der Ausnehmung 16 nicht ausreicht, beispielsweise belüftete und nicht belüftete Bremsscheiben gleicher Dicke zu unterscheiden. Im allgemeinen sind auch die Achsschenkel für belüftete und massive Bremssattelausführungen unterschiedlich gestaltet, so daß bei einer Verwechslung erhebliche Störungen auftreten können, beispielsweise dadurch, daß zwischen Bremsschlauch und Karosserie nicht genügend Platz ist und im Fahrzeugbetrieb dadurch erhöhter Verschleiß auftritt.

Mit der Verwendung des erfindungsgemäßen Abstandshalters kann also nicht nur dafür gesorgt werden, daß die Belagträgerplatten bis zur Endmontage sicher positioniert bleiben, sondern auch daß die Montage nicht zusammengehörender Bauelemente weitgehend vermieden wird.

## Patentansprüche

1. Bremssattelmodul für eine Scheibenbremse mit einem Bremssattel (1), der in montiertem Zustand die Bremsscheibe randseitig übergreift und der einen Arbeitszylinder (2) mit Anschlüssen (3, 4) für eine hydraulische Betätigungseinrichtung sowie Montageaugen (5, 6) für eine Bolzenführung umfaßt, mit einem Arbeitskolben sowie mit zwei Belagträgerplatten (7, 8), die mittels Federelementen gegen die Stirnfläche des Kolbens bzw. die Innenfläche des außen liegenden Schenkels (10) des Bremssattels (1) angedrückt sind und die in montiertem Zustand mit je zwei in Umfangsrichtung der Bremsscheibe (17) gesehen beabstandeten, belagfreien Tragteilen (11, 12) in Ausnehmungen eines Bremsträgers eingreifen, dadurch gekennzeichnet, daß das Bremssattelmodul für Lagerung und Transport mit einem abnehmbaren Abstandshalter (13', 13'') versehen ist, der die Belagträgerplatten (7, 8) bis zur Befestigung des Bremssattelmoduls am Bremsträger in der bei der Herstellung eingestellten Position hält.

2. Bremssattelmodul nach Anspruch 1, dadurch gekennzeichnet, daß der Abstandshalter (13', 13'') mindestens zwei auf die Dicke der Belagträgerplatten (7, 8) abgestimmte Ausnehmungen (14, 15) aufweist und von oben auf die belagfreien Tragteile (11, 12) der Belagträgerplatten (7, 8) klemmend aufsteckbar ist.

3. Bremssattelmodul nach Anspruch 1 oder 2, dadurch gekennzeichnet, daß der Abstandshalter (13', 13'') außerdem eine auf die zugehörige Bremsscheibe (17) abgestimmte und beabstandete Ausnehmung (16) aufweist.

4. Bremssattelmodul nach einem der Ansprüche 1 bis 3, dadurch gekennzeichnet, daß der Abstandshalter (13', 13'') zur Erleichterung der Zuordnung der Bremsmodule zu den zugehörigen Bremsscheibentypen farbig markiert oder aus eingefärbtem Material hergestellt ist.

5. Bremssattelmodul nach einem der Ansprüche 1 bis 4, dadurch gekennzeichnet, daß der Abstandshalter (13', 13'') aus einem geeigneten Kunststoff hergestellt ist.

6. Bremssattelmodul nach einem der Ansprüche 1 bis 5, dadurch gekennzeichnet, daß der Abstandshalter (13', 13'') zweiteilig ausgebildet ist.

7. Bremssattelmodul nach Anspruch 6, dadurch gekennzeichnet, daß der Abstandshalter aus zwei Abschnitten (13', 13'') eines Kunststoff-Strangpreßprofils besteht, die mit sich senkrecht zur Strangachse erstreckenden Ausnehmungen (14, 15, 16) versehen sind.

8. Bremssattelmodul nach Anspruch 7, dadurch gekennzeichnet, daß der Abstandshalter aus zwei Abschnitten (13', 13'') eines Kunststoffrohres besteht, in denen im Querschnitt gesehen, im wesentlichen rechteckige, sich über etwa dem halben Rohrquerschnitt erstreckende und auf die Dicke der Belagträgerplatte (7, 8) und der Bremsscheibe (17) abgestimmte und beabstandete Ausnehmungen ausgebildet sind.
